Europäisches Patentamt

(19) European Patent Office

Office européen des brevets

(11) Publication number : **0 309 196 B1**

(12) **EUROPEAN PATENT SPECIFICATION**

(45) Date of publication of patent specification :
10.04.91 Bulletin 91/15

(51) Int. Cl.⁵ : **H04N 1/387, G06F 15/72**

(21) Application number : 88308697.7

(22) Date of filing : 20.09.88

(54) Page planning system.

(30) Priority : 21.09.87 GB 8722131

(43) Date of publication of application :
29.03.89 Bulletin 89/13

(45) Publication of the grant of the patent :
10.04.91 Bulletin 91/15

(84) Designated Contracting States :
DE GB

(56) References cited :
GB-A- 2 055 010
GB-A- 2 128 843
GB-A- 2 141 899

(73) Proprietor : CROSFIELD ELECTRONICS
LIMITED
De La Rue House 3/5 Burlington Gardens
London W1A 1DL (GB)

(72) Inventor : Yeomans, Andrew James Victor
65 Grove Road
Tring Hertfordshire, HP23 5PB (GB)

(74) Representative : Skone James, Robert
Edmund et al
GILL JENNINGS & EVERY 53-64 Chancery
Lane
London WC2A 1HN (GB)

## Description

The invention relates to a page planning system.

In the printing industry, it is necessary to print onto a web carrying an image or text certain page information to ensure for example that the image or text is printed in the correct manner. For example, in the case of colour images where each image is represented by three or four colour separations which are printed in series one on top of the other, it is important to ensure that each colour separation is printed in register with the others. To achieve this, register marks are printed alongside the picture in association with each colour separation and the relative positions of the register marks are then compared to check the registration of the separations.

As well as print control information such as register marks, the page information may include marks to indicate where the web should be folded or cut and marks indicating the colour of an ink used in printing an associated separation.

In all these cases, the page information is not normally visible in the finished, printed product after cutting, folding and the like and should be distinguished from the main printed picture or text. Generally, these marks fall within the term "imposition".

In the past, page information has been printed onto a web in association with the main picture or text by providing corresponding mark printing members on the main printing member. Alternatively, as described in GB-A-2,055,010, register marks can be derived electronically from a store containing a digital representation of the mark, so that apparatus for preparing colour separations, typically including a laser which exposes a record medium, will respond to information in the store at a time determined by the controlling computer to record the register mark on the colour separation.

The main problem with these techniques is that the precise relationship between the main image or text to be printed and the page information cannot be varied in a controlled manner and the types of marks are limited to a small set of predefined mark types.

GB-A-2128843 describes a page planning system in which an imposition layout (sizes, spacing, orientation) is stored on a computer system and the layout is displayed according to the stored imposition layout.

In accordance with the present invention, a page planning system comprises display means ; a first store for storing first digital data defining the colour content of pixels of an image to be printed ; a second store for storing second digital data defining imposition data in the form of colour content of pixels of at least one page information image to be printed ; and processing means for performing processing operations of the same type to the first and second digital data wherein both the first and second digital data may be displayed for operator review on the display means.

With this invention, the imposition (marks etc.) is stored in the form of an image allowing normal image generation methods to be used to create imposition marks. Thus each mark is defined by a number of pixels which can be stored in standard image format, typically a run length encoded form. This allows the operator to choose the type or position of the page information prior to the printing stage and by using the conventional image modification techniques available in known page planning systems.

The page information can be associated with the image (which can comprise a monochrome or coloured picture or text) preferably during the printing of the image or the generation of physical colour separations, but may be associated electronically with the image to be printed during page planning as a prepress operation.

Typically, the image will constitute all the information that is printed on a single page but in some examples, the "image" could define the content of more than one page in which case the set of page information will relate to a corresponding number of pages and will typically include fold marks.

In general, in the case of a multi-coloured image, the second store stores digital data defining the colour content of pixels of page information for each colour separation of a multi-colour image.

The composite page can then be used to control the generation of an appropriate printing member, such as a gravure cylinder or film colour separation which will automatically have the page information incorporated in it.

Preferably, the second store stores digital data defining a number of sets of page information, the processing means being adapted to select one of the sets for use with a selected image from the first store. This enables a variety of sets of page information to be associated with images by enabling the operator to select from the library of sets stored in the second store.

As already mentioned above, by providing the page planning system with the page information in image format, it is possible for the operator to modify the page information interactively by viewing each set on a monitor and to select accurately the relative orientation between the image and the set of page information.

The second store may hold the Print Control-/Page Information in a variety of formats. Since only small portions of the finally printed page will be controlled by data in the second store, it is appropriate to use encoded formats, such as run-length encoded, or alternatively holding it as a set of vectors.

In the preferred arrangement, the processing means is adapted to respond to lower resolution versions of the page information and image data when generating the composite page. In this case, once the lower resolution composite page has been generated, the generation of a final composite page at the desired, output high resolution can be deferred until the final version has been determined at the lower resolution thus making it easier to alter rapidly the page information itself during page planning.

An example of a page planning system according to the invention will now be described with reference to the accompanying drawings, in which :

Figure 1 is a block diagram of the apparatus ; and,

Figures 2A-2C illustrate an image, a set of register marks, and a composite page respectively.

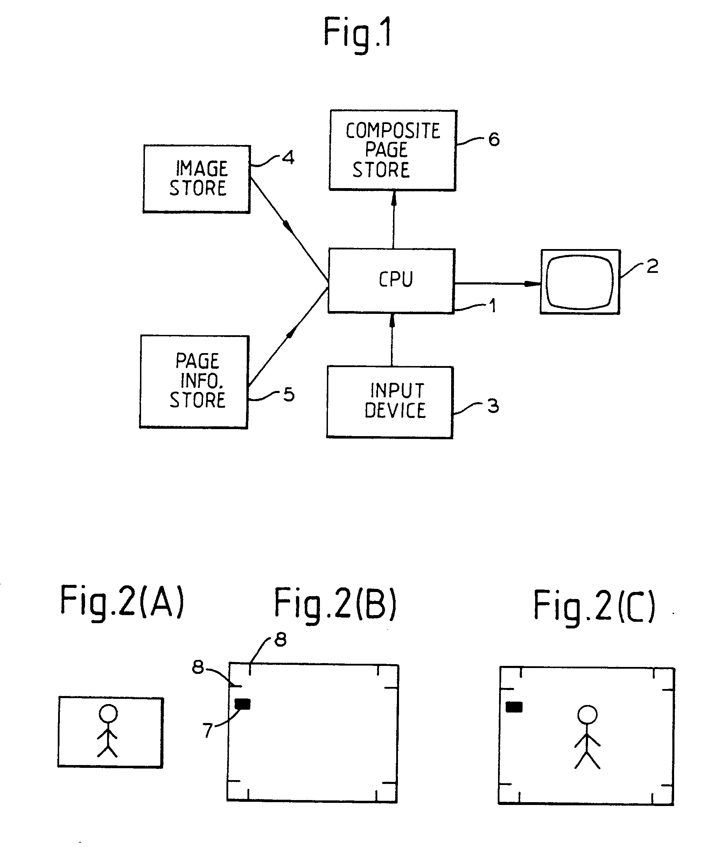

The apparatus shown in Figure 2 comprises a microprocessor 1 coupled in a conventional manner with a monitor 2 and an operator actuable input device such as a digitising table and cursor 3. The microprocessor 1 is also coupled with an image store 4 storing digital data defining the colour content of respective colour separations (cyan, magenta, yellow and black) of pixels of an image, and a store 5 containing digital data defining page information. The page information is defined in terms of two dimensional arrays of output pixels corresponding to the full area needed to define an image and the page information for a single page with the page information itself, such as register marks, defined by digital data located at the pixels where the information is to be printed. In this example, the microprocessor 1 is also coupled with a composite page store 6 for storing the resulting output, composite page although in other examples this is not necessary when the imposition is associated with the image during output scanning.

Figure 2A illustrates schematically the appearance of an image to be printed. Figure 2B illustrates an example of a set of page information. It will be noted that the area of the "page" defined by Figure 2B is larger than that defined by Figure 2A since the page information itself must not encroach onto the image area. In this particular example, Figure 2B illustrates a register mark 7 and two cut marks at each corner two of which are indicated by reference numeral 8.

In use, the operator plans a page in a conventional manner by accessing image information from the store 4 and enlarging, rotating, or cropping etc the image to the final desired form. In this example, it is assumed that the final form of the image will be as shown in Figure 2A. Examples of these techniques are shown in GB-A-2128843.

The operator then selects from a library of sets of page information stored in the store 5 the desired set, as illustrated in Figure 2B. This set can then be modified using the same page planning technique (rotation etc) used on the image. Alternatively, the page information can be created by the operator using the digitising table 3. In this example, the microprocessor 1 merges the two "images" together in a manner exactly similar to the merging of conventional images during a page planning operation. The operator controls the microprocessor 1 by using the digitising table 3 and while viewing the effects of his commands on the monitor 2. The operator can thus work in an interactive manner to generate the final composite page as shown in Figure 2C. As shown in Figure 2C, the final, composite page has an area equivalent to that of the page information set (Figure 2B) with the register mark and cut marks merged with the image. This resultant composite page is then stored in the store 6.

The content of the store 6 will then be used to control for example a colour separation generator having a laser beam for exposing a record medium, the laser beam being modulated not only in response to the main image (Figure 2A) but also the page information since in the final composite page these different elements will be indistinguishable to the beam modulator.

Although stores 4, 5 are shown as separate units they could be provided by separate parts of a common memory.

## Claims

1. A page planning system comprising :

display means (2) ; a first store (4) for storing first digital data defining the colour content of pixels of an image to be printed ; a second store (5) for storing second digital data defining imposition data in the form of colour content of pixels of at least one page information image to be printed ; and processing means (1) for performing processing operations of the same type to the first and second digital data wherein both the first and second digital data may be displayed for operator review on the display means.

2. A system according to claim 1, wherein the data defining the colour content of the pixels of the images to be printed and the data defining at least one set page of information are held in a coded form representing a standard image format.

3. A system according to claim 1 or claim 2, wherein the second store (5) stores digital data defining the colour content of pixels of page information for each colour separation of a multi-colour image.

4. A system according to any of claims 1-3, wherein the second store (5) stores digital data defining a number of sets of page information, the processing means being adapted to select one of the sets for use with a selected image from the first store.

5. A system according to any of the preceding claims, wherein the processing means (1) is adapted to associate corresponding digital data in the first and second stores (4, 5) to generate a composite image comprising the first store image and corresponding page information.

## Ansprüche

1. Seitenbewirtschaftungssystem mit einem Anzeigegerät (2) ; einem ersten Speicher (4) zum Speichern von ersten digitalen Daten, die den Farbgehalt von Bildelementen eines zu druckenden Bildes bestimmen ; einem zweiten Speicher (5) zum Speichern von zweiten digitalen Daten, die Steuerdaten bestimmen in Form von einem Farbgehalt der Bildelemente eines zu druckenden Bildes mit wenigstens einer Seiteninformation ; und einer Datenverarbeitungseinheit (1) für die Durchführung von Datenverarbeitungsvorgängen des den ersten und zweiten digitalen Daten entsprechenden Datentyps, wobei sowohl die ersten als auch die zweiten digitalen Daten auf dem Anzeigegerät angezeigt werden können, um dem Bedienungspersonal eine Übersicht zu geben.

2. System nach Anspruch 1, wobei die Daten, die den Farbgehalt der Bildelemente des zu druckenden Bildes bestimmen, und die Daten, die wenigstens einen Satz an Seiteninformation bestimmen, in einer codierten Form, welche ein Standardbildformat darstellt, gehalten werden.

3. System nach Anspruch 1 oder 2, wobei der zweite Speicher (5) die digitalen Daten speichert, die den Farbgehalt von Bildelementen einer Seiteninformation für jede Farbauftrennung des mehrfarbigen Bildes bestimmen.

4. System nach einem der Ansprüche 1 bis 3, wobei der zweite Speicher (5) die digitalen Daten speichert, die mehrere Sätze für eine Seiteninformation bestimmen, und die Datenverarbeitungseinheit in der Lage ist, einen dieser Sätze für die Verwendung mit einem ausgewählten Bild aus dem ersten Speicher auszusuchen.

5. System nach einem der vorangehenden Ansprüche, wobei die Datenverarbeitungseinheit (1) in der Lage ist, entsprechende digitale Daten aus dem ersten und zweiten Speicher (4, 5) zuzuordnen zur Erzeugung eines zusammengesetzten Bildes, welches das erste Speicherbild und die entsprechende Seiteninformation umfaßt.

## Revendications

1. Système de conception de pages, comprenant :

un moyen d'affichage (2) ; une première mémoire (4) destinée à mémoriser les premières données numériques définissant la teneur chromatique des pixels d'une image devant être imprimée ; une deuxième mémoire (5) destinée à mémoriser les secondes données numériques définissant les données d'imposition sous la forme de la teneur chromatique de pixels d'au moins une image de page d'information devant être imprimée ; et un moyen de traitement (1) devant exécuter les opérations de traitement du même type que les premières et secondes données numériques où tant les premières que les secondes données numériques peuvent être affichées sur le moyen d'affichage pour révision par l'opérateur.

2. Système selon la revendication 1, où les données définissant la teneur chromatique des pixels des images à imprimer ainsi que les données définissant au moins une page déterminée d'information sont mémorisées sous forme codée représentant un format d'image normalisé.

3. Système selon la revendication 1 ou la revendication 2, où la seconde mémoire (5) mémorise des données numériques définissant la teneur chromatique des pixels d'une information de page pour chaque séparation de couleur d'une image polychromatique.

4. Système selon l'une quelconque des revendications 1-3, où la seconde mémoire (5) mémorise des données numériques définissant un certain nombre d'ensembles d'informations de page, le moyen de traitement étant adapté pour sélectionner un des ensembles pour utilisation avec une image sélectionnée dans la première mémoire.

5. Système selon l'une quelconque des revendications précédentes, où le moyen de traitement (1) est adapté aux données numériques associées correspondantes dans les première et seconde mémoires (4, 5) afin de générer une image composée comprenant la première image mémorisée et l'information de page correspondante.

# Fig.1

# Fig.2(A)   Fig.2(B)   Fig.2(C)